# EUROPEAN PATENT APPLICATION

(11) **EP 0 938 839 A1**
(43) Date of publication of application: **01.09.1999**
(21) Application number: 99103454.7
(22) Date of filing: 23.02.1999
(51) Int. Cl.: A01D 46/26

(54) **Portable vibrating tool, for the harvesting of olives, almonds, coffee beans and other fruits**

(30) Priority: 25.02.1998 IT BA980011
(71) Applicant: Troiano Michele E Valentini Anna, Palo Del Colle (BA) (IT); STIM, 70122 Bari (IT)
(72) Inventor: Troiano Michele E Valentini Anna, Palo Del Colle (BA) (IT); STIM, 70122 Bari (IT)

(57) **Abstract**

Portable vibrating tool for the harvesting of olives, almonds, coffee beans and other fruits comprising a vibrating body (2) and an extension rod (3), and characterised by the fact that it is provided with devices to generate a vibrating motion in high-frequency modulation and devices to clamp the branches of the fruit trees to vibrate. The result of these operations is very effective: they cause the rapid detachment of the fruits from the tree without transmitting them high values of the angular momentum, and, consequently, without scattering them around the ground. The invention also performs clamping and vibrating operations without damaging the tree. Moreover, the tool has anti-vibrating systems (11) to avoid the transmission of the vibrations to the operator. Lastly, the tool can be characterised by a movable handle (14), which allows the operator to adjust the height and the inclination of the tool.

## Description

### Technical field

The present invention relates to a portable vibrating tool for the harvesting of olives, almonds, coffee beans and other fruits. In the state of the technique there are already several mechanical harvesters for olives and other fruits, like shaking hooks and beating rakes, which cause the detachment of the fruits transmitting mechanical vibrations to the tree. The beating rakes operates by means of a comb that penetrates into the tree-top. The comb, in some cases two combs acting as a rake, shakes the olives loose from the tree.

The known applications, however, show some drawbacks that make their use not very popular. The shaking hook, for example, does not reach a satisfactory harvesting rate and does not operate correctly with big branches of olives. Combs, instead, have the inconvenience of scattering the olives on the ground around the tree making the collection difficult and time-consuming. The dispersion of the olives on the ground is caused by the angular momentum. This method does not cut the time of harvest also because the comb has to map the whole tree foliage.

### Disclosure of the invention

The invention solves the above mentioned problems due to the fact that it is a portable vibrating tool for the harvesting of olives, almonds, coffee and other fruits, comprising a vibrating body, portable or set on an extension rod, and characterised by means generating a vibrating motion in high-frequency modulation vibrations and devices to clamp the fruit-bearing branches to which the vibration has to be transmitted. The method is very effective for it causes the release of the fruits from their stem without transmitting high angular momentum, and, consequently, without scattering the fruits on the ground.

Other aim of the invention is to perform the clamping and vibrating operations without damaging the tree, thanks to the fact that the tool has proper means to smooth the clamping stress. Moreover, the invention is provided with anti-vibrating systems to avoid the transmission of the vibrations to the operator. According to a subsequent aim, the invention is characterised by a movable handle, which allows the operator to adjust the height and the inclination of the tool. In this way, depending on the working conditions, the operator can reduce the weight to support and improve the penetration of the tool into the branches.

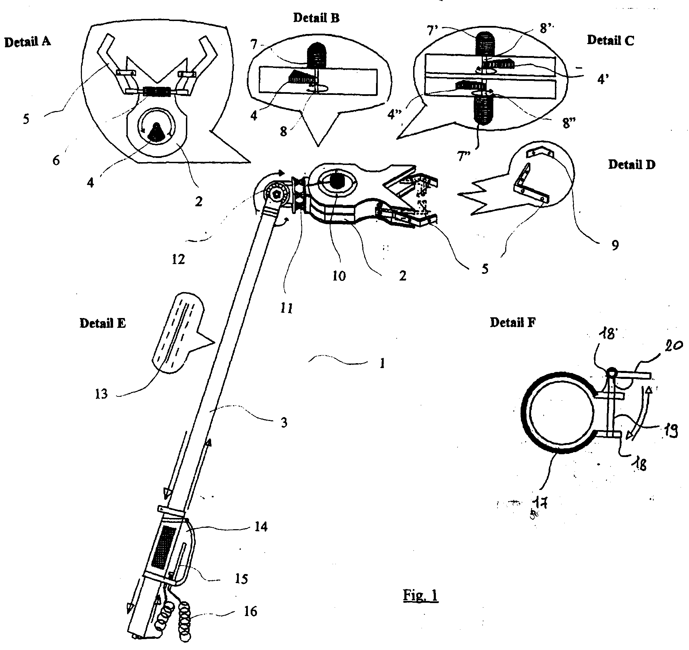

These and other advantages will be pointed out in the detailed description of the invention that will refer to the figures of the table 1/1 in which a preferred scheme (Fig. 1) and some details of the invention are shown. Both are exemplifying and not restrictive.

### Way of carrying out the invention

With reference to Figure 1, 1 is the portable vibrating tool according to the invention. It comprises a vibrating body 2, which can be carried by hand or, e.g., by means of an extension rod 3. At one end of this rod, there is a movable handle 14 comprising a manual control 15 to operate pneumatic, hydraulic, and mechanical (or any other kind of) actuators 16. In "E" the inside of the rod 3 and the actuator control circuit 13 are shown. The vibrating body 2, shown in "A", is characterised by means generating a vibrating motion in high-frequency modulation, comprising at least an eccentric mass 4 (detail "B") which is rotated by a pneumatic, hydraulic, electric (or any other kind of) engine connected to the mass through a shaft 8 (or any other suitable device suitable for motion transmission). The vibrating body 2 is also characterised by a device to clamp the branches of the trees to vibrate; such clamping devices comprise at least a couple of pliers 5 operated by a penumatic, hydraulic, or of any kind of actuator 6. As shown in detail "D", said pliers can be usefully provided with rubber coverings 9 not to damage the tree during the clamping and shaking. In detail "C", a second possible realization of the invention is schematised: the vibrating body is provided with two eccentric masses 4' and 4'', each of them is connected to an independent engine 7' and 7'' by means of different shafts 8' and 8''. In such a way there are wider possibilities of modulating the vibrations transmitted by the vibrating body to the tree. According to a practical carrying out, the vibrating body can be provided with a suitable disconnectable flange 10 which allows to insert and pull out the eccentric mass; moreover, the anti-vibrating systems 11 can be used to avoid the transmission of the vibrations to the rod 3 and, consequently, to the operator; the vibrating body can also be provided with at least an articulated joint 12 between the rod 3 and the body 2 to favor the most suitable inclination of the body according to the branch to vibrate. Lastly, in detail "F" the movable handle schematised in 14 comprises an elastic clamping device 17, whose ends 18 can move by means of a pin 19 controlled by the lever 20.

### Example

The working principle of the vibrating tool is quite simple: with the pliers 5 opened, the tool is positioned near the branch to vibrate.Then, the pneumatic (or any other kind of) control allows the pliers to close over the branch and the tool begins vibrating by means of the engine which controls the rotation of the eccentric mass 4 up to a speed higher than 6000 rpm.

The high speed vibration transmitted to the branch allows the rapid detachment of the fruits without scattering them. Using a second eccentric mass 4'' of different weight and/or geometry and a different and/or counter rotation speed, it is possible to vary the frequency of the vibration in any way to detach even the fruits far away from the tool.

Lastly, the movable handle 14 optimises the use of the tool in all the possible situations as it allows the adjustment of the height and the inclination of the tool.

## Claims

1. Portable vibrating tool for the harvesting of olives, almonds, coffee beans and other fruits, comprising a vibrating body and an extension rod, characterised by the fact that is provided with devices to generate a vibrating motion in high-frequency modulation and devices to clamp the branches of the fruit trees to which such a vibration has to be transmitted.

2. Portable vibrating tool according to the claim 1, characterized by the fact that said devices generating a vibrating motion in high-frequency modulation comprise at least an eccentric mass 4 rotated by a pneumatic, hydraulic, electric (or any other kind of) engine connected to the mass by means of a shaft 8 (or any other suitable mean for motion transmission).

3. Portable vibrating tool according to the claim 1, characterized by the fact that said devices to generate a vibrating motion in high-frequency modulation comprise also a second eccentric mass 4'' of different weight and/or geometry than 4' and a different and/or counter rotation speed; being said second eccentric connected to a second independent engine by means of a second different shaft.

4. Portable vibrating tool according to the claim 2 or 3, characterized by the fact that said vibrating body can be provided with a suitable disconnectable flange 10 which makes possible to insert and pull out the eccentric mass.

5. Portable vibrating tool according to one of the previous claims, characterized by the fact that said clamping devices comprise at least a couple of pliers 5, whose closure and opening is controlled by an actuator 6, which can be pneumatic, oleodynaimc or of any other kind.

6. Portable vibrating tool according to the claim 5, characterized by the fact that said couple of pliers is provided with rubber coverings 9 not to damage the tree during the clamping and the vibrating operations.

7. Portable vibrating tool according to one of the previous claims, characterized by the fact that the vibrating body is provided with anti-vibrating systems 11 to avoid the transmission of the vibrations to the rod.

8. Portable vibrating tool according to one of the previous claims, characterized by the fact that it is also provided with at least an articulated joint 12, between the rod 3 and the body 2, to allow the most suitable inclination depending on the position of the branch to vibrate.

9. Portable vibrating tool according to one of the previous claims, characterized by the fact that its handle is movable and allows the adjustment of the height and inclination of the tool.

10. Portable vibrating tool according to the claim 9, characterized by the fact that said movable handle comprises an elastic clamping device 17, whose ends 18 can move by means of a pin 19 controlled by a lever 20.
